# EUROPÄISCHE PATENTSCHRIFT

(11) **EP 1 902 279 B1**
(45) Veröffentlichungstag und Bekanntmachung des Hinweises auf die Patenterteilung: **17.03.2010**
(21) Anmeldenummer: 06764087.0
(22) Anmeldetag: 06.07.2006
(51) Int. Cl.: G01G 19/04

(54) **MOBILE MESSEINRICHTUNG ZUM ERFASSEN VON RADLASTEN VON SCHIENENFAHRZEUGEN**
MOBILE MEASURING DEVICE FOR DETECTING THE WHEEL LOADS OF RAILWAY VEHICLES
DISPOSITIF DE MESURE MOBILE DESTINE A DETECTER LA CHARGE DE ROUES DE VEHICULES SUR RAILS

(30) Priorität: 07.07.2005 DE 102005031797; 07.07.2005 DE 202005010669 U
(43) Veröffentlichungstag der Anmeldung: 26.03.2008
(73) Patentinhaber: Winkler, Jan, 14482 Potsdam (DE)
(72) Erfinder: WINKLER, Reinhard, 14482 Potsdam (DE)
(74) Vertreter: Schneider, Henry
(86) Internationale Anmeldenummer: PCT/EP2006/063939
(87) Internationale Veröffentlichungsnummer: WO 2007/006710

(56) Entgegenhaltungen:
- EP-A- 1 288 638
- WO-A-2004/027355
- DE-U1- 20 214 267
- DE-U1-202005 010 669
- GB-A- 2 315 559

## Beschreibung

Die Erfindung betrifft eine mobile Messeinrichtung zum Erfassen von statischen und/oder dynamischen Radlasten bzw. Radaufstandskräften von Schienenfahrzeugen in einem Schienenpaar.

Es ist bekannt, Radlasten bzw. Radaufstandskräfte von Schienenfahrzeugen zu erfassen. Diese Prüfarbeitsgänge sind nach genau festgelegten Kriterien in der Fahrzeuginstandhaltung durchzuführen und in der Lebenslaufakte eines jeden Schienenfahrzeuges zu dokumentieren. Durch diese Prüfungen wird der Nachweis zulässiger Rad- und Achslastdifferenzen eines Schienenfahrzeuges zur Vermeidung von Entgleisungen und der Verringerung von Schleuderneigungen erbracht.

Weiterhin ist bekannt, mit derartigen Prüfeinrichtungen das Gesamt- bzw. das Betriebsgewicht eines Schienenfahrzeuges zu ermitteln, um Überladungen, die zu einer Überbeanspruchung des Schienennetzes führen, zu vermeiden. Die bekannten Wäge- bzw. Messsysteme finden stationär und mobil Anwendung.

Eine Vorrichtung zum Anzeigen der Belastung, die durch jede Radachse und/oder jedes Rad eines Eisenbahnwaggons ausgeübt wird, ist in der EP 1 208 360 B1 beschrieben. Diese Vorrichtung umfasst zwei im Wesentlichen konvexe Trägerschuhe, die so ausgelegt sind, dass sie entlang eines Schienenpaares mittels zweier Druckstreben an die jeweilige Schieneninnenseite gepresst werden. In den Trägerschuhen sind Messvorrichtungen angeordnet, mit welchen Radaufstandskräfte gemessen werden. Die Trägerschuhe sind jeweils in An- und Abfahrtrichtung mit separaten Rampen versehen, über welche die Räder auf einen Messabschnitt bzw. auf diesem aufliegende Verschleißbahn auffahren. Dabei werden die Räder vorn Schienenkopf abgehoben, liegen frei und können vermessen werden. Eine fast identisch gestaltete Messvorrichtung ist in der DE 202 20 959 U1 und der EP 1 288 638 A2 beschrieben.

In der WO 2004/027355 A1 wird ein Messapparat zur Feststellung von Lasten auf Schienen beschrieben. Der Messapparat macht sich die Verformung des Schienenkörpers unter Last zu Nutze, um über elektrische Wandler die gemessene Last bzw. Kraft anzuzeigen. Bei diesem Messprinzip verbleibt das Rad eines Schienenfahrzeuges während der Messung mit seiner Lauffläche auf dem Schienenkopf. Von Nachteil ist, dass der Schienensteg zur Aufnahme der elektrischen Wandler durchbohrt werden muss oder alternativ unterhalb des Schienenfußes entsprechende Haltezwingen anzubringen sind. Da die Verformung der Schienen auch von äußeren Einflüssen, wie z.B. Temperaturschwankungen, beeinflusst wird, sind die Messungen auf der Grundlage der Verformung der Schienenkörpers nicht genau.

Ein Verfahren zum Erfassen von Radlasten von Schienenfahrzeugen und eine mobile Messeinrichtung ist in der DE 102 29 512 B4 und eine Messeinrichtung zum Erfassen von Radlasten ist in der DE 202 14 267 U1 beschrieben. Diese Messeinrichtungen bestehen aus mindestens zwei Lastaufnahmeblöcken bzw. Trägerschuhen mit in diesen angeordneten Messabschnitten. In einem Lastaufnahmeblock sind mindestens zwei kraftumleitende Elemente und mindestens zwei Stützmittel angeordnet. Die Lastaufnahmeblöcke bzw. Trägerschuhe sind nur mit einer einarmigen Verspannvorrichtung im Schienenpaar lösbar arretiert.

Als nachteilig hat sich bei den Radlastmessvorrichtungen nach EP 1 208 360 B1, DE 202 20 959 U1 und EP 1 288 638 A2 erwiesen, dass sich die Radlastmessvorrichtungen während der Montage nicht mehr der aktuellen Einbausituation, die auf Grund von Fertigungstoleranzen im Gleisbau und im Herstellungsprozess der Schiene auftreten, anpassen können. Dadurch kommt es zu Kipp- und Anhebeerscheinungen der Messvorrichtungen unter Last, was zu Messwertverfälschungen führt. Will man das durch Anwendung erhöhter Spannkraft vermeiden, treten Deformationen des Metallkörpers ein. Außerdem sind die in diesen Schriften beschriebenen Messeinrichtungen sehr kompakt und schwer.

Die Messeinrichtungen nach DE 202 14 267 U1 und DE 102 29 512 B4 sind, obwohl schon wesentlich leichter als die zuvor beschriebenen Messeinrichtungen, immer noch zu schwer.

Der Erfindung liegt die Aufgabe zu Grunde, eine mobile Vorrichtung vorzuschlagen, mit welcher eine schnellere und einfachere Montage und Demontage unter gleichzeitiger Verringerung des Gewichtes der gesamten Messeinrichtung erreicht wird. Mit der vorzuschlagenden mobilen Vorrichtung sind Verkantungen und Verspannungen und damit einhergehende Messwertfehler auszuschließen. Die vorzuschlagende Vorrichtung ist in allen Schienenprofilen und Spurweiten und bei geringfügig gekrümmten Gleisabschnitten einsetzbar, wobei die Messeinrichtung so gestaltet ist, dass sie auch dauerhaft im stationären Einbau einsetzbar ist.

Gemäß der Erfindung wird eine Messeinrichtung zum Erfassen von Radlasten von Schienenfahrzeugen zum Verspannen in einem Schienenpaar mit einem Aufnahmerahmen zur Aufnahme von einem Messmittel oder Kraftsensor und mit mindestens einer Vorrichtung zum Halten und Verspannen des Aufnahmerahmens vorgeschlagen.

Mindestens eine Vorrichtung zum Halten und Verspannen ist so angeordnet, dass deren Verspannkräfte über Druckbolzen direkt durch Öffnungen in dem Aufnahmerahmen auf eine Schiene wirken.

Ferner ist gemäß der Erfindung vorgesehen, dass der Aufnahmerahmen entweder nach oben und nach unten offen oder nur nach oben offen ist. Der Aufnahmerahmen ist in seiner Längsrichtung parallel zur Schiene angeordnet. Dieser offene Rahmen nimmt ein Kraftübertragungsmittel in Form eines Trägers auf, wobei der Träger wiederum auf Messmitteln oder Kraftsensoren lagert. Als Messmittel finden ein oder mehrere zylindrische Messbolzen mit Dehnungsmessstreifen, wobei die Dehnungsmessstreifen im Inneren des Messbolzens oder in einer Tasche appliziert sind, Verwendung.

Der Aufnahmerahmen besteht aus einer der Schiene abgewandten Innenseite und einer der Schiene zugewandten Außenseite. Beide Seiten sind vorn und hinten durch Stützfüße verbunden, die die Schmalseiten des Aufnahmerahmens und die Endstücke der Innenseite und der Außenseite bilden. Das heißt, der Rahmen ist kastenförmig. Die Stützfüße sind von besonderer Stabilität, da sie einerseits Kräfte von den Messbolzen aufnehmen und andererseits diese Kräfte wiederum auf die Schiene zu übertragen haben.

In den Stützfüßen bzw. den Endstücken der Innenseite und der Außenseite des Aufnahmerahmens sind jeweils gegenüber angeordnete weitere Durchbrüche vorgesehen, in welche erwähnte Messbolzen gesteckt werden. Gemäß der Erfindung werden in jedes Endstück/Stützfuß mindestens ein Messbolzen eingeschoben, so dass innerhalb eines Aufnahmerahmens über zwei Messbolzen Radaufstandskräfte ermittelbar sind. Es liegt im Bereich der Erfindung, an Stelle der gegenüberliegenden weiteren Durchbrüche schlitzförmige Aussparungen vorzusehen, in welche die Messbolzen eingelegt werden.

Innerhalb des Rahmens liegt ein Träger auf diesen zwei Messbolzen auf. Dieser Träger kann alternativ auch mit zwei Durchbrechungen versehen sein, wobei durch diese Durchbrechungen hindurch die Messbolzen führen, so dass die Messbolzen mit ihren Endstücken jeweils in der Innen- bzw. Außenseite des Rahmens lagern und ihr Mittelstück in der Durchbrechung des Trägers angeordnet ist. Bei der Montage ist der Träger in den Aufnahmerahmen zu legen und der jeweilige Messbolzen durch eine Öffnung in der die Innenseite des Aufnahmerahmens, die Öffnung im Träger und durch die Öffnung in der Außenseite des Aufnahmerahmens zu schieben.

Es ist auch möglich, bei Verwendung geeigneter Messbolzen, mehr als zwei Messbolzen ein zusetzten. Alternativ kann natürlich an Stelle eines Messbolzens mit beschriebener Lagermöglichkeit auch ein Kraftsensor Anwendung finden, der in dem Rahmen, beispielsweise im Bereich der Stützfüße, angeordnet ist und auf diesem wiederum der Träger verrutschsicher lagert. Wichtig ist hierbei vor allem, dass der Träger nicht unmittelbar mit dem Rahmen in Verbindung steht, um nicht durch ein Verklemmen des Trägers Messwerte zu verfälschen.

Der Träger liegt brückenförmig auf den Messmitteln auf, wobei auf dem Träger noch zusätzlich eine Verschleißbahn aufliegt, auf welcher bei Benutzung der Messeinrichtung der Spurkranz eines Rades auffährt. Die Radaufstandskräfte werden demzufolge über die mit dem Träger kraftschlüssig verbundene Verschleißbahn über den Träger auf die Messbolzen übertragen. Die Verschleißbahn ist zum Schienenverlauf gesehen, also in Fahrtrichtung, vorn und hinten angeschrägt, wobei die Verschleißbahn einteilig ist und in ihrer längsten Ausdehnung bis über die im Rahmen angeordneten Messmittel reicht.

An den Stützfüßen sind punkt- oder streifenförmigen Auflagen zur Arretierung des Aufnahmerahmens an der Schiene angeordnet.

Die Verspannvorrichtung ist einarmig, das heißt über eine ein- oder mehrteilige Verspannvorrichtung werden die Verspannkräfte zur Arretierung der Messeinrichtung nur einmal in die linke und rechte Schiene übertragen. Eine einarmige Verspannvorrichtung besteht aus zwei Verspannhülsen, zwischen denen eine gegenläufige Schraubverspannung angeordnet ist. Die anderen Enden der beiden Verspannhülsen gehen in einen Druckbolzen über, der im Betriebszustand der Messeinrichtung die Verspannkräfte direkt auf den Schienensteg der linken und rechten Schiene überträgt. Die Verspannvorrichtung wird bei der Montage links und rechts auf ein an der Innenseite des Aufnahmerahmens angeordnetes Führungsstück aufgesetzt und mittels Verriegelung lösbar verbunden.

Ist vorgesehen, eine mehrarmige, ein- oder mehrteilige Verspannvorrichtung zu verwenden, so können deren Einzelbestandteile ebenso wie die einer einarmigen Verspannvorrichtung aufgebaut sein. Der wesentliche Unterschied zwischen den beiden Verspannvorrichtungen besteht darin, dass, wie beschrieben, bei der einarmigen Verspannvorrichtung die Verspannkräfte zur Arretierung der Messeinrichtung nur einmal in die linke und rechte Schiene übertragen, während bei einer mehrarmigen Verspannvorrichtung die Verspannkräfte zur Arretierung der Messeinrichtung an mehreren Punkten auf die linke und rechte Schiene übertragen werden.

Findet eine einarmige Verspannvorrichtung Anwendung, so führen die Druckbolzen der Verspannvorrichtung durch mittige Öffnungen in dem Aufnahmerahmen und durch ein Auge im Träger direkt auf die Schiene.

Findet eine zweiarmige Verspannvorrichtung Anwendung, so führen die Druckbolzen der Verspannvorrichtungen durch entsprechende Öffnungen (Augen) durch die Stützfüße des Aufnahmerahmens hindurch direkt auf die Schiene.

Es liegt im Bereich der Erfindung, an Stelle einer einarmigen oder mehrarmigen Verspannvorrichtung auch eine Verklammerung zu verwenden. Bei Verwendung einer solchen Verklammerung wird der Aufnahmerahmen im Bereich seiner Stützfüße mittels Klammer um den Schienenfuß und unter diesem hindurch arretiert.

Die Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen schutzfähige Ausführungen darstellen, für die hier Schutz beansprucht wird.

Zwei Ausführungsbeispiele der Erfindung sind in der Zeichnung dargestellt und werden im Folgenden näher erläutert. In der zugehörigen Zeichnung zeigen:
- Fig. 1: eine Draufsicht auf eine einarmige Messeinrichtung,
- Fig. 2: eine Seitenansicht einer Messeinrichtung mit Teilschnitten,
- Fig. 3: einen Schnitt durch einen Träger,
- Fig. 4: eine Draufsicht auf einen Aufnahmerahmen,
- Fig. 5: einen Schnitt durch einen Stützfuß des Aufnahmerahmens,
- Fig. 6: einen Schnitt durch einen am Schienensteg und Schienenfuß anliegenden Stützfuß mit innenliegendem Messbolzen,
- Fig. 7: eine Draufsicht auf eine zweiarmige Messeinrichtung.

### Beispiel 1

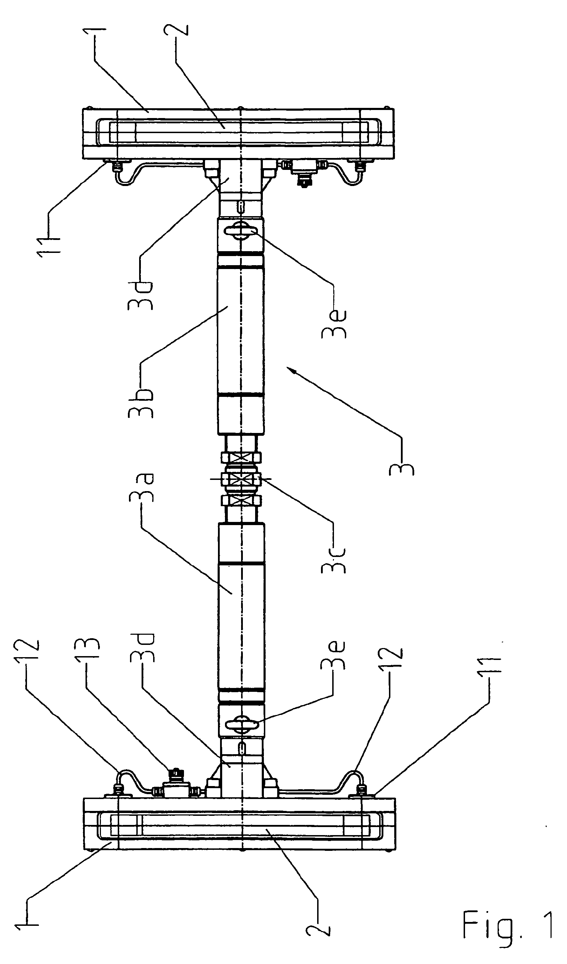

Fig. 1 zeigt eine Draufsicht einer einarmigen Messeinrichtung. Die Messeinrichtung besteht aus einer Verspannvorrichtung 3, die links- und rechtsseitig einen Aufnahmerahmen 1 mit innenliegendem Träger 2 an dem Schienenpaar hält. Die einarmige Verspannvorrichtung 3 besteht aus zwei Verspannhülsen 3a und 3b, die wiederum auf Führungsstücke 3d aufgesetzt und mittels Verriegelung 3e an diesen befestigt werden. Eine gegenläufige Schraubverspannung 3c sichert eine feste Verspannung im Schienenpaar. In jedem der beiden Aufnahmerahmen 1 ist je ein Träger 2 angeordnet. Der Träger 2 nimmt an seinen Enden jeweils einen Messbolzen 11 auf. Im Messbolzen 11 sind Dehnungsmessstreifen mit oder ohne Messverstärker angeordnet. Die Messergebnisse aus einem Messbolzen 11 im Träger 2 werden über die Messleitung 12 zusammengeführt und über die Schnittstelle 13 zu einem externen Computer geleitet.

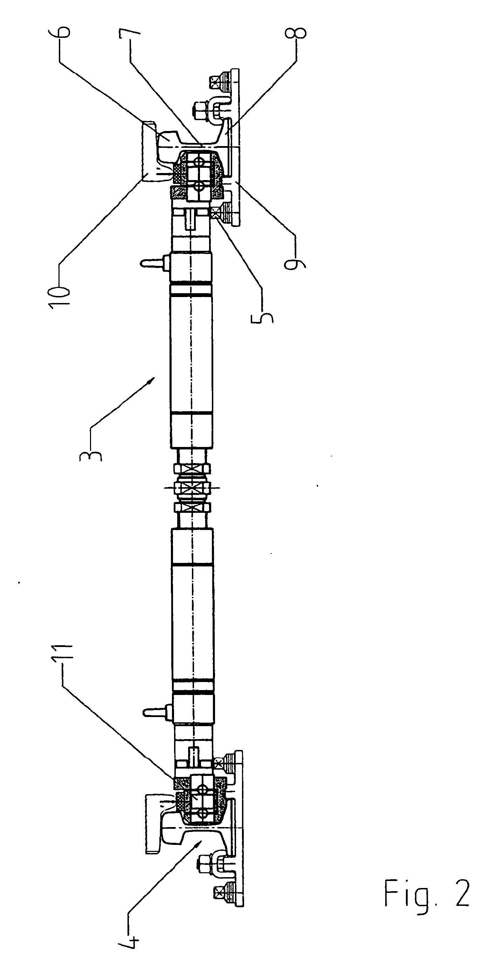

Fig. 2 zeigt eine Seitenansicht der Messeinrichtung mit Teilschnitten. Es ist wiederum eine schon detailliert beschriebene Verspannvorrichtung 3 zu sehen, die links- und rechtsseitig den jeweiligen Aufnahmerahmen 1 mit jeweils innenliegendem Träger 2 an den Schienen 4 hält. Aus dieser Figur ist deutlich zu entnehmen, dass die Messeinrichtung oberhalb der Schwellenschraube 5, die die Schiene 4 in der Rippenplatte 9 befestigt, arretiert ist.

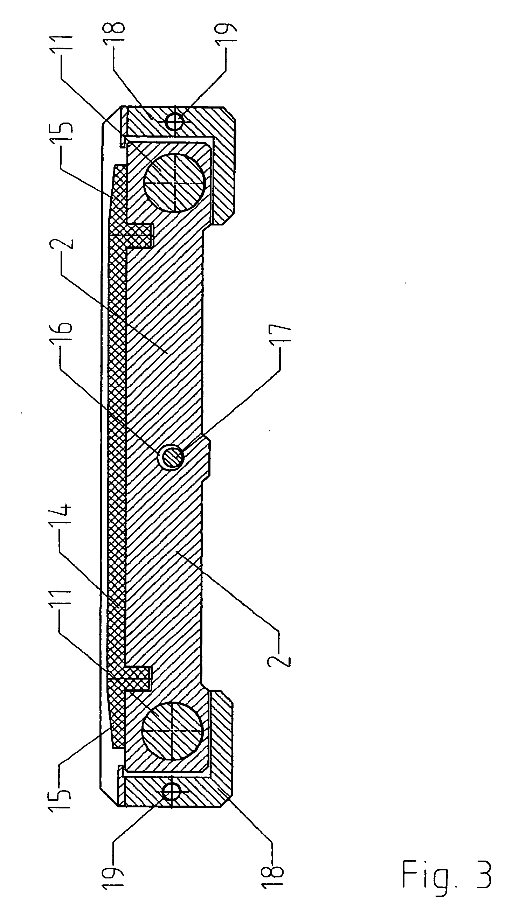

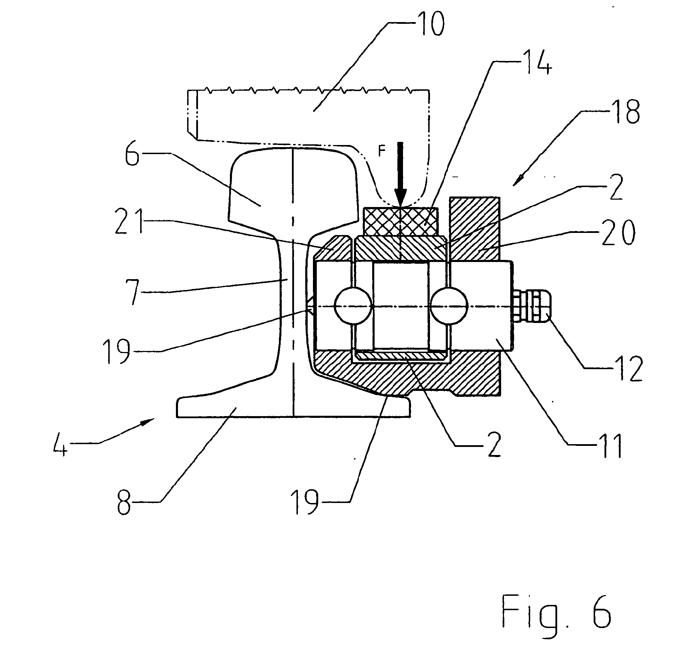

Fig. 3 zeigt einen Träger 2, der links- und rechtsseitig bzw. parallel zum Schienenverlauf gesehen, vorn und hinten von je einem Messbolzen 11 getragen wird. Der Messbolzen 11 verläuft dabei, wie aus Fig. 6 zu entnehmen ist, quer zur Fahrtrichtung, horizontal vorn und hinten durch den Träger 2 und wird von der Innenseite 20 des Aufnahmerahmens 1 und der Außenseite 21 des Aufnahmerahmens 1 gehaltert. Auf dem Träger 2 ist mittels Zapfen eine Verschleißbahn 14 arretiert.

Mittig weist der Träger 2 ein Auge 16 auf. Durch dieses Auge 16 wird ein Druckbolzen 17 geführt. Der Druckbolzen 17 ist eine Verlängerung bzw. das beidseitige Endstück der Verspannvorrichtung 3. Über den Druckbolzen 17 werden die Kräfte, die von der Verspannvorrichtung 3 ausgehen, auf den Schienensteg 7 direkt übertragen, so dass die hauptsächliche Kraftverteilung zur Arretierung der Messeinrichtung in einer geraden Vektorlinie links- und rechtsseitig von der Verspannvorrichtung 3 auf den Druckbolzen 17 und die Schiene 4 erfolgt. Damit entfallen, wie aus dem Stand der Technik bekannt, verschiedene Kraftverteilerbrücken. Das Führungsstück 3d nimmt von der Verspannvorrichtung 3 nur so viel Kraft auf, wie zum Halten der beiden Aufnahmerahmen im Gleisbett erforderlich ist.

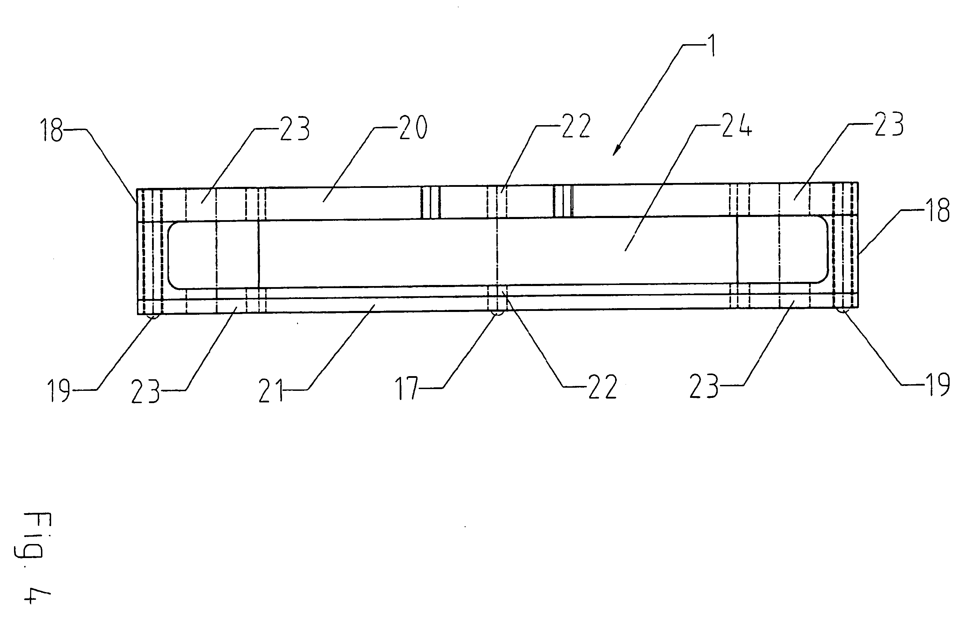

In Fig. 4 ist eine Draufsicht auf einen Aufnahmerahmen 1 dargestellt. Der Aufnahmerahmen 1 besteht aus einer von der Schiene 4 abgewandten Innenseite 20 und einer der Schiene 4 zugewandten Außenseite 21. Die Innenseite 20 ist stärker dimensioniert, weil sie das Führungsstück 3d der Verspanneinrichtung 3 aufnimmt. Zwischen der Innenseite 20 und der Außenseite 21 befindet sich der Innenraum 24, in dem der Träger 2 eingelegt wird. Da, wie beschrieben, der Träger 2 mittig ein Auge 16 zum Durchführen des Druckbolzens 17 aufweist, ist auch die Innenseite 20 und die Außenseite 21 mit je einem Durchbruch 22 für den Druckbolzen 17 versehen. Die links- und rechtsseitigen bzw. im Schienenverlauf gesehenen, vorn und hinten angeordneten Stützfüße 18 des Aufnahmerahmens 1 weisen je einen weiteren Durchbruch 23 auf. In den weiteren Durchbrüchen 23 ist jeweils ein Messbolzen 11 quer zum Schienenverlauf gelagert.

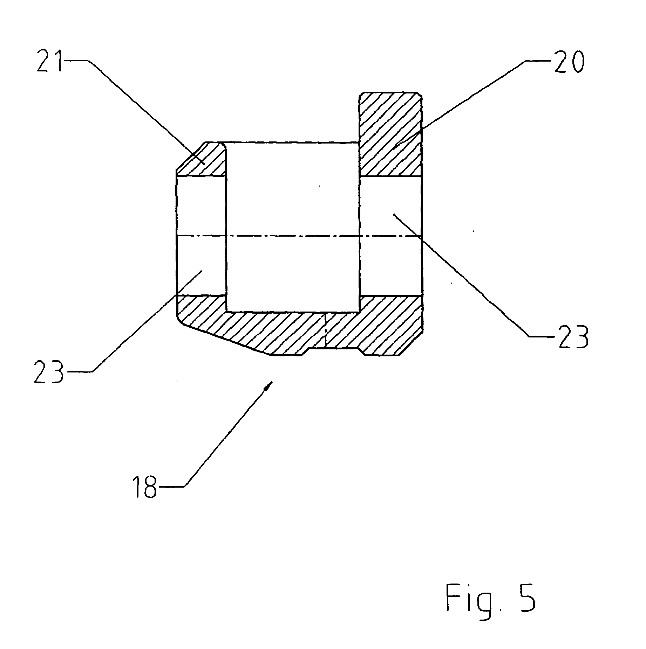

Fig. 5 zeigt einen Schnitt durch einen Stützfuß 18 des Aufnahmerahmens 1. In dieser Figur ist die stärker dimensionierte Innenseite 20 des Aufnahmerahmens 1 und die geringer dimensionierte Außenseite 21 des Aufnahmerahmens 1 zu sehen. Beide Seiten 20; 21 sind mit weiteren Durchbrüchen 23 zur Aufnahme des Messbolzens 11 ausgestattet.

Eine Schiene 4, bestehend aus Schienenkopf 6, Schienensteg 7 und Schienenfuß 8 mit anliegendem Stützfuß 18 des Aufnahmerahmens 1 ist in Fig.6 dargestellt. Über punkt- oder streifenförmige Auflagen 19 liegt der Stützfuß 18 am Schienensteg 7 an und am Schienenfuß 8 auf. Die Fig. 3 und 6 verdeutlichen, dass der Träger 2 brückenförmig in dem Stützfuß 18 frei hängend, nur über die Messbolzen 11 arretiert ist und diese wiederum in der Innenseite 20 und der Außenseite 21 fest gelagert sind.

Auf dem Träger 2 ist eine Verschleißbahn 14 angeordnet. Die Verschleißbahn ist, wie aus Fig. 3 ersichtlich, an der Auf- und Abfahrtseite mit einer Auffahrschräge 15 so angeschrägt, dass ein Rad 10, nachdem es über die Auffahrtschräge 15 mittig auf der Verschleißbahn 14 steht, einen Spalt breit, etwa 1 mm bis 2 mm, vorn Schienenkopf 6 abgehoben ist. Jetzt erst, wenn das Rad 10 mittig auf der Verschleißbahn 14 ist, wird der Messvorgang vollzogen.

### Beispiel 2

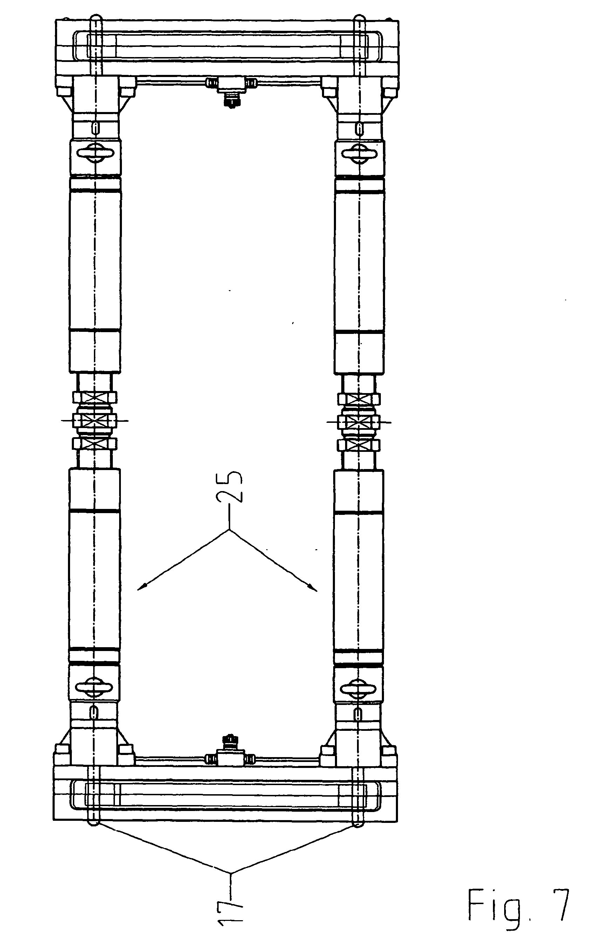

Fig. 7 zeigt eine Draufsicht auf eine zweiarmig verspannte Messeinrichtung. Die Messeinrichtung besteht aus zwei Verspannvorrichtungen 25, die links- und rechtsseitig die Aufnahmerahmen 1 mit innenliegendem Träger 2 an dem Schienenpaar halten. Die zweiarmige Verspannvorrichtung 25 besteht - wie im Beispiel 1 beschrieben - aus je zwei Verspannhülsen 3a und 3b, die wiederum auf Führungsstücke 3d aufgesetzt und mittels Verriegelung 3e an diesem befestigt sind. Die gegenläufigen Schraubverspannungen 3c sichern eine feste Verspannung im Schienenpaar.

In jedem der beiden Aufnahmerahmen 1 ist - wie im Beispiel 1 beschrieben - je ein Träger 2 angeordnet. Der Träger 2 nimmt an seinen Enden jeweils einen Messbolzen 11 auf. Im Messbolzen 11 sind Dehnungsmessstreifen mit oder ohne Messverstärker angeordnet. Die Messergebnisse aus einem Messbolzen 11 im Träger 2 werden über die Messleitung 12 zusammengeführt und über die Schnittstelle 13 zu einem externen Computer geleitet.

Nach diesem Ausführungsbeispiel weist der Träger 2 kein Auge 16 auf, durch welches der Druckbolzen 17 geführt wird. Der Druckbolzen 17, als Verlängerung bzw. als beidseitiges Endstück der beiden Verspannvorrichtungen 25, wird durch die jeweiligen Stützfüße 18 des Aufnahmerahmens 1 hindurch geführt. Über die Druckbolzen 17 werden die Kräfte, die von den Verspannvorrichtungen 25 ausgehen, auf den Schienensteg 7 direkt übertragen, so dass die hauptsächliche Kraftverteilung zur Arretierung der Messeinrichtung in einer geraden Vektorlinie links- und rechtsseitig von den Verspannvorrichtungen 25 über die Druckbolzen 17 durch die Stützfüße 18 hindurch direkt auf die Schienen 4 erfolgt. Damit entfallen, wie aus dem Stand der Technik bekannt, verschiedene Kraftverteilerbrücken. Das Führungsstück 3d nimmt von den Verspannvorrichtungen 25 nur so viel Kraft auf, wie zum Halten der beiden Aufnahmerahmen 1 im Gleisbett erforderlich ist.

## Patentansprüche

1. Messeinrichtung zum Erfassen von Radlasten über den Spurkranz der Räder von Schienenfahrzeugen zum Verspannen in einem Schienenpaar, mit Aufnahmerahmen (1) zur Aufnahme von einem Messmittel oder Kraftsensor und mit mindestens einer Vorrichtung zum Halten und Verspannen der Aufnahmerahmen (1) zur Aufnahme des Messmittels, **dadurch gekennzeichnet, dass** die Vorrichtung zum Halten und Verspannen so anordbar ist, dass deren Verspannkräfte über Druckbolzen (17) durch Durchbrüche (22) in den Seitenwänden des parallel zur Schiene (4) angeordneten kastenförmigen Aufnahmerahmens (1) hindurch direkt auf eine Schiene (4) wirken, wobei in dem kastenförmigen Aufnahmerahmen (1) ein Träger (2) und die Messmittel angeordnet sind.

2. Messeinrichtung nach Anspruch 1, **dadurch gekennzeichnet, dass** der kastenförmige Aufnahmerahmen (1) nach oben und nach unten offen oder nur nach oben offen ist und mit dem Träger (2) als Kraftübertragungsmittel über die Messmittel in Verbindung steht, wobei der Träger (2) brückenförmig auf den Messmitteln in dem kastenförmigen Aufnahmerahmen (1) angeordnet ist.

3. Messeinrichtung nach Anspruch 1, **dadurch gekennzeichnet, dass** das Messmittel ein zylindrischer Messbolzen (11) mit Dehnungsmessstreifen ist, wobei der Dehnungsmessstreifen im Inneren des Messbolzens (11) oder in einer Tasche appliziert ist.

4. Messeinrichtung nach einem der vorangegangenen Ansprüche, **dadurch gekennzeichnet, dass** der Träger (2) von mindestens zwei, quer zur Längsrichtung des Trägers (2) angeordneten Messbolzen (11) gehaltert ist und Radaufstandskräfte über den Träger (2) auf die Messbolzen (11) übertragbar sind, wobei die den Träger (2) überstehende Enden der Messbolzen (11) in Aussparungen oder weiteren Durchbrüchen (23) des Aufnahmerahmens (1) gelagert sind.

5. Messeinrichtung nach einem der vorangegangenen Ansprüche, **dadurch gekennzeichnet, dass** der Aufnahmerahmen (1) aus einer der Schiene (4) abgewandten Innenseite (20), einer der Schiene (4) zugewandten Außenseite (21) und vorn und hinten, die beiden Seiten (20; 21) verbindenden, Stützfüßen (18), besteht.

6. Messeinrichtung nach einem der vorangegangenen Ansprüche, **dadurch gekennzeichnet, dass** der Träger (2) Augen zum Hindurchführen von Druckbolzen (17), vorzugsweise ein mittig angeordnetes Auge (16), aufweist.

7. Messeinrichtung nach Anspruch 6, **dadurch gekennzeichnet, dass** auf dem Träger (2) eine Verschleißbahn (14) aufliegt und dass diese zum Schienenverlauf gesehen, vorn und hinten angeschrägt und einteilig ist.

8. Messeinrichtung nach Anspruch 5, **dadurch gekennzeichnet, dass** an den Stützfüßen (18) punkt- oder streifenförmige Auflagen (19) zur Arretierung des Aufnahmerahmens (1) an der Schiene (4) angeordnet sind.

9. Messeinrichtung nach einem der vorangegangenen Ansprüche, **dadurch gekennzeichnet, dass** die Vorrichtung zum Halten und Verspannen mindestens zwei kastenförmige Aufnahmerahmen (1) verbindet und aus einer einarmigen, ein- oder mehrteiligen Verspannvorrichtung (3) besteht.

10. Messeinrichtung nach einem der vorangegangenen Ansprüche, **dadurch gekennzeichnet, dass** die Vorrichtung zum Halten und Verspannen mindestens zwei kastenförmige Aufnahmerahmen (1) verbindet und aus einer mehrarmigen, ein- oder mehrteiligen Verspannvorrichtung (25) besteht.

11. Messeinrichtung nach einem der vorangegangenen Ansprüche, **dadurch gekennzeichnet, dass** die Vorrichtung zum Halten und Verspannen der kastenförmigen Aufnahmerahmen (1) in einer Gleisanlage aus einer an einem Schienenfuß (8) und/oder an einem Schienensteg (7) angeordneten Verklammerung bestehen.

12. Verwendung von Messbolzen (11), wie sie im Anspruch 3 beschrieben sind, als eine Messeinrichtung zum Erfassen von statischen und/oder dynamischen Radlasten bzw. Radaufstandskräften von Schienenfahrzeugen.

13. Verwendung nach Anspruch 12 für eine Messeinrichtung mit ein- oder mehrarmig verspannten Vorrichtungen (3; 25) zum Halten und Verspannen in einer Gleisanlage und/oder Klammervorrichtungen zum Halten und Verspannen an einer Schiene (4).

## Claims

1. A measuring device for detecting wheel loads via the flange of the wheels of rail-bound vehicles which is intended to be secured in a pair of rails and comprises receiving frames (1) for receiving a measuring means or a force sensor and comprises at least one device for holding and securing said receiving frames (1) for receiving said measuring means,
**characterized in that** said device for holding and securing can be arranged such that its securing forces act directly on a rail (4) via thrust bolts (17) passing through openings (22) in the side walls of the box-shaped receiving frame (1) which is arranged parallel to said rail (4), wherein a carrier (2) and the measuring means are arranged in said box-shaped receiving frame (1).

2. A measuring device according to claim 1, **characterized in that** the box-shaped receiving frame (1) is open upwards and downwards or is open only upwards and is connected to the carrier (2) acting as a force transmission means via the measuring means, wherein said carrier (2) is arranged on said measuring means in said box-shaped receiving frame (1) in a bridge-shaped manner.

3. A measuring device according to claim 1, **characterized in that** the measuring means is a cylindrical gauging pin (11) comprising a strain gauge, wherein said strain gauge is attached inside said gauging pin (11) or in a pouch.

4. A measuring device according to any one of the preceding claims, **characterized in that** the carrier (2) is held by at least two gauging pins (11) which are arranged transversely to the longitudinal direction of said carrier (2), and that wheel contact forces can be transmitted to said gauging pins (11) via said carrier (2), wherein the ends of the gauging pins (11) which project beyond said carrier (2) are supported in recesses or further openings (23) of the receiving frame (1).

5. A measuring device according to any one of the preceding claims, **characterized in that** the receiving frame (1) consists of an inner side (20) facing away from the rail (4), an outer side (21) facing towards said rail (4), and support feet (18) which connect the two sides (20; 21) at the front and rear thereof.

6. A measuring device according to any one of the preceding claims, **characterized in that** the carrier (2) comprises eyes for passing through thrust bolts (17), preferably a centrally arranged eye (16).

7. A measuring device according to claim 6, **characterized in that** an abrasion layer (14) rests on the carrier (2), and that said abrasion layer is bevelled at the front and rear thereof, seen in the direction of the rail, and is made of a single piece.

8. A measuring device according to claim 5, **characterized in that** point- or strip-shaped rests (19) are arranged on the support feet (18) to secure the receiving frame (1) to the rail (4).

9. A measuring device according to any one of the preceding claims, **characterized in that** the device for holding and securing connects at least two box-shaped receiving frames (1) and consists of a securing device (3) comprising one arm and which is made of one or several piece(s).

10. A measuring device according to any one of the preceding claims, **characterized in that** the device for holding and securing connects at least two box-shaped receiving frames (1) and consists of a securing device (25) comprising several arms and which is made of one or several piece(s).

11. A measuring device according to any one of the preceding claims, **characterized in that** the device for holding and securing the box-shaped receiving frames (1) in a rail installation consists of a clamp which is arranged on a rail base (8) and/or on a rail web (7).

12. The use of gauging pins (11) as described in claim 3 as a measuring device for detecting static and/or dynamic wheel loads or wheel contact forces of rail-bound vehicles.

13. The use according to claim 12 for a measuring device comprising devices (3; 25) for holding and securing in a rail installation which are secured by means of one or several arms and/or comprising clamping devices for holding and securing on a rail (4).

## Revendications

1. Equipement de mesure pour l'enregistrement de charges de roue sur le boudin des roues de véhicules ferroviaires pour le serrage dans une paire de rails, avec des cadres de réception (1) pour la réception d'un moyen de mesure ou capteur de force, et avec au moins un dispositif de retenue et de serrage des cadres de réception pour la réception du moyen de mesure, **caractérisé en ce que** le dispositif de retenue et de serrage peut être disposé de sorte que ses forces de serrage agissent directement sur un rail (4) par le biais de boulons de pression (17) à travers des percées (22) dans les parois latérales du cadre de réception (1) en forme de caisson disposé parallèlement au rail (4), un support (2) et les moyens de mesure étant disposés dans le cadre de réception (1) en forme de caisson.

2. Equipement de mesure selon la revendication 1, **caractérisé en ce que** le cadre de réception (1) en forme de caisson est ouvert vers le haut et vers le bas ou n'est ouvert que vers le haut, et est en liaison avec le support (2) en tant que moyen de transmission de force via les moyens de mesure, le support (2) étant disposé en forme de pont sur les moyens de mesure dans le cadre de réception (1) en forme de caisson.

3. Equipement de mesure selon la revendication 1, **caractérisé en ce que** le moyen de mesure est une tige de mesure (11) cylindrique avec des jauges extensométriques, la jauge extensométrique étant appliquée à l'intérieur de la tige de mesure (11) ou dans une poche.

4. Equipement de mesure selon une des revendications précédentes, **caractérisé en ce que** le support (2) est retenu par au moins deux tiges de mesure (11) disposées transversalement à la direction longitudinale du support (2), et **en ce que** des forces de point de contact de roue peuvent être transmises aux tiges de mesure (11) par le biais du support (2), les extrémités des tiges de mesure (11) dépassant du support (2) reposant dans des évidements ou d'autres percées (23) du cadre de réception (1).

5. Equipement de mesure selon une des revendications précédentes, **caractérisé en ce que** le cadre de réception (1) se compose d'un côté intérieur (20) opposé au rail (4), d'un côté extérieur (21) tourné vers le rail (4) et, à l'avant et l'arrière, de pieds d'appui (18) raccordant les deux côtés (20 ; 21).

6. Equipement de mesure selon une des revendications précédentes, **caractérisé en ce que** le support (2) présente des oeillets pour insérer des boulons de pression (17), de préférence un oeillet (16) disposé de façon centrale.

7. Equipement de mesure selon la revendication 6, **caractérisé en ce qu'**une piste d'usure (14) repose sur le support (2), et **en ce que**, vu dans le sens de pose des rails, cette piste est biseautée à l'avant et à l'arrière et est d'une seule pièce.

8. Equipement de mesure selon la revendication 5, **caractérisé en ce que**, sur les pieds d'appui (18), sont disposés des appuis (19) ponctuels ou en bande pour arrêter le cadre de réception (1) sur le rail (4).

9. Equipement de mesure selon une des revendications précédentes, **caractérisé en ce que** le dispositif de retenue et de serrage raccorde au moins deux cadres de réception (1) en forme de caisson et se compose d'un dispositif de serrage (3) à un bras, en une ou plusieurs pièces.

10. Equipement de mesure selon une des revendications précédentes, **caractérisé en ce que** le dispositif de retenue et de serrage raccorde au moins deux cadres de réception (1) en forme de caisson et se compose d'un dispositif de serrage (25) à bras multiples, en une ou plusieurs pièces.

11. Equipement de mesure selon une des revendications précédentes, **caractérisé en ce que** le dispositif de retenue et de serrage des cadres de réception (1) en forme de caisson se compose, dans une installation de voies, d'un cramponnage disposé sur un patin du rail (8) et/ou sur une âme du rail (7).

12. Utilisation de tiges de mesure (11), telles qu'elles sont décrites dans la revendication 3, en tant qu'équipement de mesure pour l'enregistrement de charges de roue ou de forces de point de contact de roue statiques et/ou dynamiques.

13. Utilisation selon la revendication 12 pour un équipement de mesure avec des dispositifs (3 ; 25) serrés à bras unique ou à bras multiples pour la retenue et le serrage dans une installation de voies et/ou des dispositifs de crampon pour la retenue et le serrage sur un rail (4).
